(19) Europäisches Patentamt
European Patent Office
Office européen des brevets

(11) **EP 2 868 902 B1**

(12) **EUROPEAN PATENT SPECIFICATION**

(45) Date of publication and mention
of the grant of the patent:
**14.12.2016  Bulletin 2016/50**

(51) Int Cl.:
***F02D 35/02*** *(2006.01)*

(21) Application number: **14189888.2**

(22) Date of filing: **22.10.2014**

(54) **Power unit of saddle-riding type vehicle, saddle-riding type vehicle and method for controlling power unit**

Antriebseinheit eines Sattelfahrzeugs, Sattelfahrzeug und Verfahren zur Steuerung der Antriebseinheit

Unité motrice de véhicule de type à selle, véhicule de type à selle et procédé de commande d'unité de puissance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2013  JP 2013222131**

(43) Date of publication of application:
**06.05.2015  Bulletin 2015/19**

(73) Proprietor: **Yamaha Hatsudoki Kabushiki Kaisha Iwata-shi, Shizuoka 438-8501 (JP)**

(72) Inventors:
 • **Araki, Yuuji**
 **Iwata-shi, Shizuoka 438-8501 (JP)**
 • **Ishigami, Hidetoshi**
 **Iwata-shi, Shizuoka 438-8501 (JP)**

 • **Ito, Daiki**
 **Iwata-shi, Shizuoka 438-8501 (JP)**
 • **Iwamoto, Kazuteru**
 **Iwata-shi, Shizuoka 438-8501 (JP)**
 • **Takahashi, Koji**
 **Iwata-shi, Shizuoka 438-8501 (JP)**
 • **Takahashi, Seigo**
 **Iwata-shi, Shizuoka 438-8501 (JP)**

(74) Representative: **Grünecker Patent- und Rechtsanwälte PartG mbB Leopoldstraße 4 80802 München (DE)**

(56) References cited:
 **DE-B3-102009 056 478     US-A1- 2007 199 367
 US-A1- 2007 215 109       US-A1- 2009 158 816**

**Description**

The present invention relates to a power unit of a saddle-riding type vehicle, a saddle-riding type vehicle and a method for controlling a power unit of a saddle-riding type vehicle.

Prior art document DE 10 2009 056478 B3 refers to a method for correcting knock information taken from a pressure sensor signal. Said prior art document refers to the modes within said signal, in particular the first, second and third mode. The arrangement of the knock sensor and further specific design details causes a damping and amplifying of the modes within the measured signal so that said signal does not directly coincide with the actual pressure status within the combustion chamber. In order to correct said signal, it is determined beforehand whether there is some amplifying or damping of the respective modes in order to have a reference for correcting the sensor signals in order to come much closer to the actual status within the combustion chamber.

JP 2005-083314 A discloses a technique of extracting a signal in an audible range from output of a knock sensor to determine knocking compatible with human hearing based on the extracted signal in the audible range.

In general, there is known a problem in that large knocking may damage the engine.

Meanwhile, during the course of development, it has been found that small knocking that does not damage the engine may give a rider a harsh feeling in a saddle-riding type vehicle.

To determine that small knocking occurs, it has been examined applying the technique of determining the occurrence of knocking compatible with human hearing disclosed in JP 2005-083314 A to the saddle-riding type vehicle.

However, as a result of extracting a signal in an audible range from the output of a knock sensor to determine that knocking occurs according to the technique of JP 2005-083314 A, it was impossible to accurately determine the occurrence of small knocking that gives a harsh feeling in the saddle-riding type vehicle.

An object of the present invention is to provide a saddle-riding type vehicle and a power unit of the saddle-riding type vehicle and a method for controlling a power unit of a saddle-riding type vehicle that can efficiently control combustion of an engine, while reducing and controlling the occurrence of knocking in an audible range that is harsh for a rider on the saddle-riding type vehicle.

According to the present invention said object is solved by a power unit of the saddle-riding type vehicle having the features of independent claim 1. Moreover, said object is also solved by a method for controlling a power unit of a saddle-riding type vehicle having the features of independent claim 9.

Furthermore, according to the present invention said object is solved by a saddle-riding type vehicle according to claim 8. Preferred embodiments are laid down in the dependent claims.

A power unit of a saddle-riding type vehicle according to an aspect is a power unit including: an engine; and a control apparatus that controls combustion of the engine, in which: the engine is configured so that vibration in an audible range and vibration in an ultrasonic range are generated by knocking, and the control apparatus includes a knock sensor that detects vibration of the engine, in which: the control apparatus extracts components in the ultrasonic range with a larger gain than that of components in the audible range from a detection signal of the knock sensor; the control apparatus determines occurrence of knocking based on the detection signal in which the components in the ultrasonic range are extracted with a larger gain than that of the components in the audible range; and the control apparatus controls the combustion of the engine based on a determination result of the occurrence of knocking.

A saddle-riding type vehicle according to an aspect includes the power unit according to the aspect of the present teaching, in which at least part of the power unit is exposed on a side of the vehicle.

Advantageous Effects of Invention

According to the present teaching, the occurrence of knocking is determined based on the detection signal of the knock sensor in which the ultrasonic range is extracted with a larger gain than the audible range, in order to control and reduce the occurrence of knocking in the audible range that is harsh for a rider. This is based on the notion that the knocking to be determined in the saddle-riding type vehicle according to the present teaching is so small knocking that such knocking is not a target of determination in the technique disclosed in JP 2005-083314 A. In a general saddle-riding type vehicle, at least part of the engine is exposed to the outside, and vibration sound of knocking is directly transmitted to the rider and the like. Therefore, it can be considered that there is a demand for determination of extremely small knocking in the general saddle-riding type vehicles, compared to automobiles or the like that include an engine room housing the engine. In the audible range, mechanical noise or the like generated by a moving section of the engine is relatively large, and the vibration sound of small knocking is hidden in the mechanical noise. Therefore, it is considered that the occurrence of knocking cannot be accurately determined with the technique of JP 2005-083314 A. According to the present teaching, vibration in the audible range and vibration in the ultrasonic range are generated by knocking in the engine. The knock sensor that detects the vibration of the engine is provided. As a result, a detection signal including the ultrasonic range that is a frequency band very distant from the mechanical noise and the like in the audible range can be obtained from the knock sensor. Also provided are: the signal extraction section that extracts the components of the ultrasonic range with a larger gain than that of the audible range from the detection signal of the knock sensor; and the control apparatus that determines that knocking occurs based on the detection signal of the knock sensor in which the ultrasonic range is extracted by the signal extraction section with a larger gain than the audible range. Therefore, the occurrence of knocking is determined based on the detection signal of the knock sensor in which the ultrasonic range that is a frequency band very distant from the mechanical noise and the like in the audible range is extracted at a larger gain, so that the occurrence of small knocking can be accurately determined. The control apparatus according to the present teaching controls the engine based on the determination result of the occurrence of knocking. As a result, the combustion of the engine can be efficiently controlled while reducing and controlling the occurrence of knocking in the audible range that is harsh for the rider. Usually, the higher the frequency, the lower the peak strength of the knocking signal will be, and the determination accuracy of the occurrence of knocking may also be reduced. However, the signal to noise ratio (S/N) is large in the ultrasonic range that is a frequency band very distant from the mechanical noise and the like in the audible range, and the determination accuracy of the occurrence of knocking can be thus ensured according to the present teaching.

Brief Description of Drawings

FIG. 1 is an external view showing a saddle-riding type vehicle of a preferred embodiment;

FIG. 2 is a block diagram showing an ECU included in the saddle-riding type vehicle and a configuration around the ECU of the embodiment;

FIG. 3 is a frequency characteristic diagram showing vibration generated in an engine of the saddle-riding type vehicle of the embodiment;

FIG. 4 is a graph showing a relationship between a bore diameter and primary and secondary resonance frequencies of knocking;

FIG. 5 is a frequency characteristic diagram describing an example of band-pass characteristics of a filter processing section of FIG. 2;

FIGS. 6A and 6B are diagrams describing definition of the bore diameter and a compression ratio, FIG. 6A illustrating a state that a piston is at a bottom dead center, and FIG. 6B illustrating a state that the piston is at a top dead center;

FIG. 7 is a flowchart showing a knock determination process executed by the ECU;

FIG. 8 is a diagram describing the knock determination process;

FIG. 9 is a flowchart showing another example of the knock determination process executed by the ECU;

FIG. 10 is a diagram describing a relationship between audibility levels of knocking vibration to be determined and knock determination thresholds;

FIG. 11 is a flowchart showing a knocking countermeasure control process executed by the ECU;

FIG. 12 is a computation condition table describing a calculation process of step S66 of FIG. 11;

FIG. 13 is a timing chart describing an example of the knocking countermeasure control process;

FIG. 14 is a block diagram showing Variation 1 of a knock interface circuit of FIG. 2;

FIG. 15 is a block diagram showing Variation 2 of the knock interface circuit of FIG. 2;

FIG. 16 is a block diagram showing Variation 3 of the knock interface circuit of FIG. 2;

FIG. 17 is a diagram describing Variation 1 of the filter processing section; and

FIG. 18 is a diagram describing Variation 2 of the filter processing section.

Description of Embodiments

Hereinafter, a preferred embodiment will be described in detail with reference to the accompanying drawings.

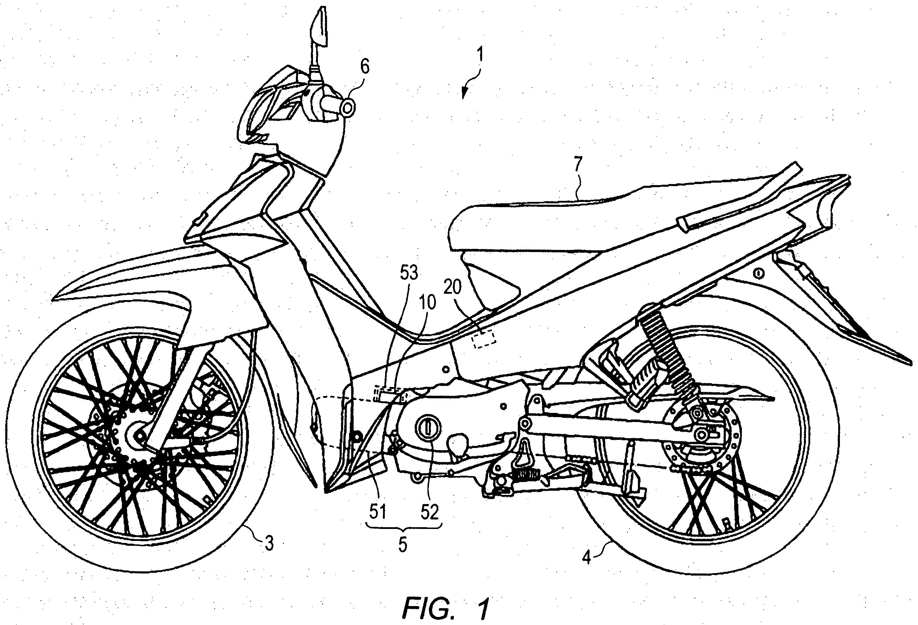

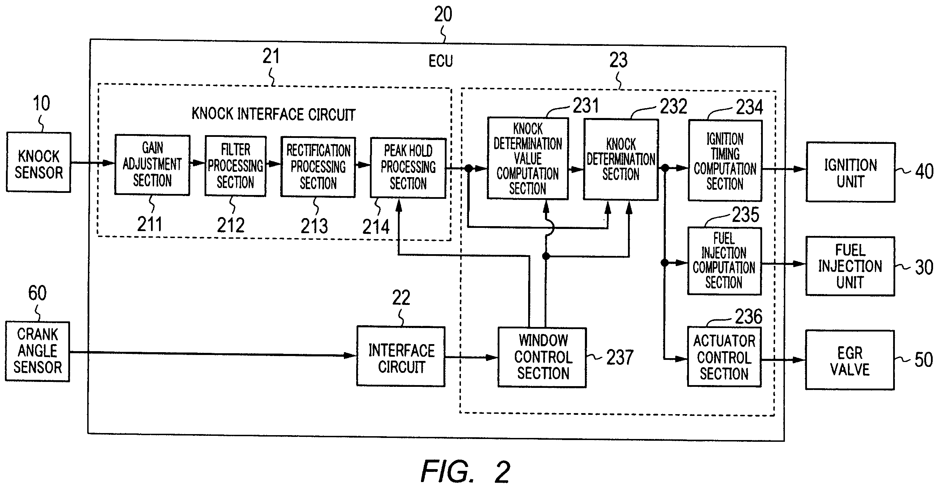

FIG. 1 is an overall view of a saddle-riding type vehicle according to Embodiment 1 of the present teaching. FIG. 2 is a block diagram showing an ECU and a configuration around the ECU according to the embodiment of the present teaching.

Saddle-riding type vehicle 1 of the present embodiment is a vehicle on which seat a driver straddles and is, for example, a motorcycle. As shown in FIG. 1, saddle-riding type vehicle 1 includes front wheel 3, rear wheel 4, engine 51 that is an internal combustion engine, power transmission section 52, ECU (Engine Control Unit) 20, handle 6, seat 7 for a rider, knock sensor 10, and the like. As shown in FIG. 2, saddle-riding type vehicle 1 further includes crank angle sensor 60, ignition unit 40, fuel injection unit 30, and EGR valve 50.

A power unit of a preferred embodiment is obtained by integrating elements that serve as power sources of saddle-riding type vehicle 1 into a single unit, and the power unit includes engine 51 and ECU 20 among the configuration elements of saddle-riding type vehicle 1. The power unit may include one or both of power transmission section 52 and a power generator that generates electric power by the rotation of engine 51. At least part of the power unit is exposed on a side of saddle-riding type vehicle 1. The term "side" used herein denotes a left side or a right side, where a front side is in the advance direction of saddle-riding type vehicle 1, and the vertical direction is an up and down direction of saddle-riding type vehicle 1.

Engine 51 is a single-cylinder engine including a single cylinder and is an air-cooled engine. Engine 51 is disposed between front wheel 3 and rear wheel 4 and is at least partially disposed below the seating surface of seat 7. At least part of the front portion and the bottom portion of engine 51 is exposed to the outside, and the outside air hits the part during traveling. The front portion denotes a front part of saddle-riding type vehicle 1, where the front side is in the advance direction of saddle-riding type vehicle 1. The bottom portion denotes a vertical bottom part.

Power transmission section 52 includes a transmission, a drive shaft, and a crankcase that houses the transmission, the drive shaft, and a crankshaft. Rotational force of the crankshaft is transmitted to the drive shaft via the transmission and is transmitted from the drive shaft to rear wheel 4 via a chain or the like.

A cylinder block of engine 51 and the crankcase of power transmission section 52 are connected in an integrated manner, and engine 51 and power transmission section 52 form integrated engine unit 5. Engine 51 and power transmission section 52 may not be integrated.

ECU 20 is a control apparatus that is mainly responsible for controls related to the combustion of the engine. ECU 20 executes a knocking determination process of determining whether knocking occurs in engine 51 and a knocking countermeasure control process of realizing efficient combustion of engine 51 without frequent occurrence of knocking.

Ignition unit 40 (FIG. 2) includes an ignition plug disposed on a cylinder head and ignites the ignition plug based on a control signal of ECU 20.

Fuel injection unit 30 (FIG. 2) includes a throttle valve that controls the intake air volume and a fuel injection apparatus that injects and supplies fuel to an intake passage. Fuel injection unit 30 injects fuel to the intake passage at timing and amount based on a control signal of ECU 20. An air-fuel mixture containing air and fuel supplied to the intake passage is supplied into the cylinder of engine 51 when the intake valve is opened.

EGR valve 50 (FIG. 2) is a valve that recirculates, to the intake passage, part of the combustion gas discharged from the cylinder of engine 51 to an exhaust passage, and EGR valve 50 changes the opening based on a control signal of ECU 20. EGR valve 50 and the control of EGR valve 50 may be omitted.

Crank angle sensor 60 (FIG. 2) is a sensor that detects the rotation angle of the crankshaft of engine 51, and crank angle sensor 60 outputs a crank angle signal to ECU 20. ECU 20 can count the rotation angle of the crankshaft and the engine speed based on the crank angle signal.

Knock sensor 10 is a vibration detection sensor that detects vibration generated in engine 51 to monitor the occurrence of knocking. Knock sensor 10 includes, for example, a piezoelectric element that receives vibration acceleration generated in engine 51, and knock sensor 10 outputs, from the piezoelectric element, a detection signal indicating AC voltage corresponding to the vibration acceleration. Knock sensor 10 is, for example, a non-resonant sensor in which the output is substantially flat in a frequency range to be detected.

Knock sensor 10 is attached to, for example, the cylinder block of engine 51 and is covered by sensor cover 53. The detection signal of knock sensor 10 is input to ECU 20.

<Details of Operation of Engine>

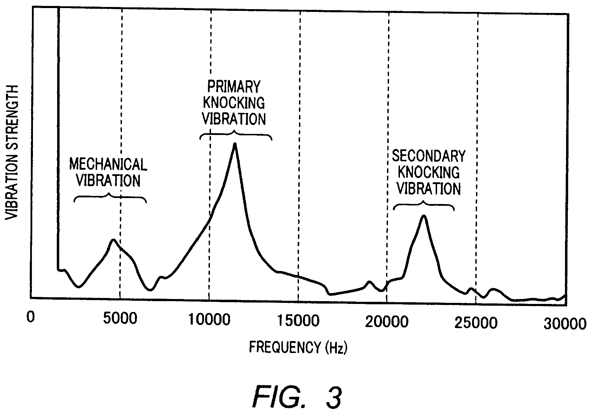

FIG. 3 is a frequency characteristic diagram showing vibration generated in the engine of the saddle-riding type vehicle of the embodiment. FIG. 3 illustrates an example of output of knock sensor 10.

Engine 51 is a four-stroke engine that sequentially repeats, for example, an intake stroke, a compression stroke, a combustion stroke, and an exhaust stroke. Engine 51 includes a cylinder block provided with the cylinder, a cylinder head that closes one of the openings of the cylinder, a piston, a connecting rod, a crankshaft, and the like. The cylinder head is provided with an intake valve, an exhaust valve, and an ignition plug.

The piston is disposed in a reciprocatory movable manner in the cylinder and connected to the crankshaft via the connecting rod. The intake valve opens and closes in the intake stroke to take a mixture of air and fuel into the cylinder. The exhaust valve opens and closes in the exhaust stroke to discharge combustion gas. Vibration called valve seating noise is generated when the intake valve closes and when the exhaust valve closes.

Once the air-fuel mixture is combusted in the cylinder as a result of ignition of the ignition plug, the piston reciprocates to rotationally drive the crankshaft. The reciprocation of the piston may generate mechanical vibration called a piston slap caused by a minute inclination of the piston in the cylinder and a minute translational movement of the piston in the radial direction of the cylinder.

As shown in FIG. 3, the peak of the mechanical vibration, such as valve seating vibration and piston slap, is distributed in a range of 7 kHz or less which is an audible range.

The air-fuel mixture may be abnormally ignited near the cylinder wall in the course of expansion of the combustion of the air-fuel mixture in the cylinder. Vibration caused by the abnormal ignition is knocking.

In FIG. 3, the peaks of the knocking vibration are distributed in a frequency band of 11 kHz to 13 kHz and a frequency band of 22 kHz to 23 kHz.

Vibration associated with combustion is generated in the course of expansion of the combustion of the air-fuel mixture in the cylinder. Hereinafter, the vibration will be called normal combustion vibration. The peak of the normal combustion vibration is distributed in a frequency band similar to the lowest frequency band (primary knocking frequency band described later) of the plurality of frequency bands with peaks of knocking vibration.

<Bore Diameter and Frequency of Knocking Vibration>

In the present embodiment, the bore diameter of engine 51 is set to a value equal to 60 mm or less (for example, 50 + several mm). The bore diameter is a parameter for determining a natural vibration frequency of the knocking vibration.

Vibrations in a plurality of vibration modes overlap in the vibration of knocking. The vibration of one vibration mode has a natural vibration frequency (also called resonance frequency). Therefore, the peaks of the vibration of knocking are generated in a plurality of frequency bands corresponding to the natural vibration frequencies of the plurality of vibration modes as shown in FIG. 3.

Hereinafter, the plurality of frequency bands including distributions of the peaks of knocking vibration will be provided with orders, such as a primary knocking frequency band for the lowest frequency band and a secondary knocking frequency band for the second lowest frequency band. The knocking vibration included in an n-th knocking frequency band will be provided with an order, such as an n-th knocking vibration.

In FIG. 3, the peak distributed in the frequency band of 11 kHz to 13 kHz is based on the primary knocking vibration and is included in an audible range. The peak distributed in the frequency band of 22 kHz to 23 kHz is based on the secondary knocking vibration and is included in an ultrasonic range.

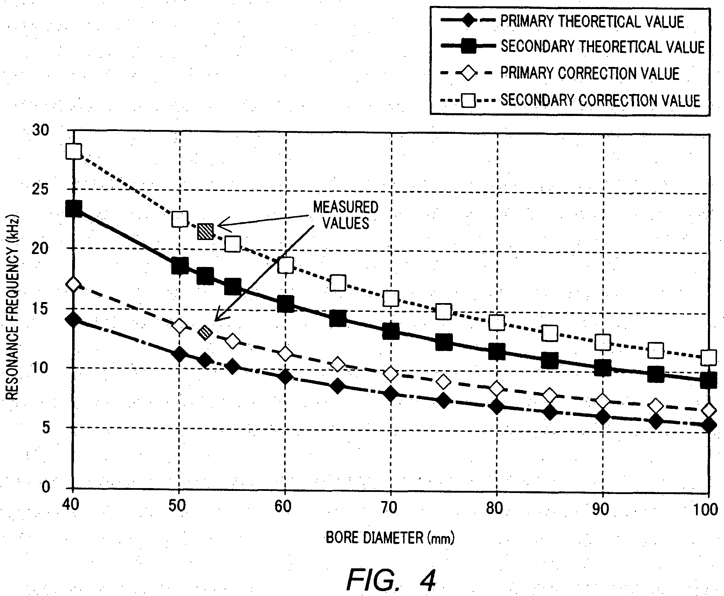

FIG. 4 is a graph showing a relationship between the bore diameter and resonance frequencies of the primary and secondary knocking vibrations.

FIG. 4 illustrates four plot lines indicating theoretical values of the resonance frequency of the primary knocking vibration ("primary theoretical values"), theoretical values of the resonance frequency of the secondary knocking vibration ("secondary theoretical values"), resonance frequencies of the primary knocking vibration corrected by a measured value ("primary correction values"), and resonance frequencies of the secondary knocking vibration corrected by a measured value ("secondary correction values").

As illustrated by the plot lines of the primary correction values and the secondary correction values of FIG. 4, the resonance frequencies of the primary and secondary knocking vibrations increase with a decrease in the bore diameter.

According to the plot lines of FIG. 4, it can be estimated that when the bore diameter of engine 51 is equal to 60 mm or less, the resonance frequency of the primary knocking vibration is about 11 kHz or more, and the resonance frequency of the secondary knocking vibration is about 18 kHz or more. Therefore, it can be estimated that the frequency band of the primary knocking vibration is in the audible range, and the frequency band of the secondary knocking vibration is in the ultrasonic range in this configuration.

An ultrasonic wave is stationary sound and is a sound wave that cannot be heard by human ears. Although the lower limit of the ultrasonic frequency is 16 kHz to 20 kHz which varies among humans, the ultrasonic range is defined as 18 kHz or more in the present specification.

The four plot lines of FIG. 4 are calculated as follows.

The primary correction value and the secondary correction value of FIG. 4 are calculated by acquiring a measured value of a bore diameter, obtaining a relative error between the theoretical value of the resonance frequency and the measured value of the bore diameter, and applying the relative error to the theoretical values of all bore diameters. The theoretical values of the resonance frequencies of the primary and secondary knocking vibrations are calculated according to the following equations 1 to 3.

Equation 1 is a well-known Draper's equation for calculating the resonance frequency of knocking.

[1]

$$f = \frac{v}{\pi B} \rho_{mn}$$

(Equation 1)

Here, f denotes resonance frequency, $v$ denotes sound velocity of cylinder gas, B denotes bore diameter, $\rho_{mn}$ denotes vibration mode coefficients ($\rho_{10} \cong 1.841$, $\rho_{20} \cong 3.054$), m denotes order of vibration in radial direction, and n denotes order of vibration in circumferential direction.

Equation 2 is an equation for obtaining the sound velocity v of the cylinder gas.

[2]

$$v = \sqrt{\frac{\kappa RT}{M}}$$

... (Equation 2)

Here, $\kappa$ denotes ratio of specific heat (1.403), R denotes gas constant (8.314472 [J/(mol·K)]), M denotes molecular weight of air (0.0028966 [kg/mol]), and T denotes cylinder gas temperature [K].

Equation 3 is an equation for estimating the cylinder gas temperature from the intake pressure and the cylinder pressure.

[3]

$$T \simeq T_i = \frac{P_i \cdot V_i}{\eta_v \cdot m_{th} \cdot R}$$

... (Equation 3)

Here, $T_i$ denotes cylinder gas average temperature, $P_i$ denotes cylinder pressure, $V_i$ denotes cylinder volume, $\eta_v$ denotes volume efficiency, $m_{th}$ denotes theoretical air mass, and R denotes air gas constant.

As shown in FIG. 4, it can be considered that the resonance frequency of the knocking vibration is substantially determined by the bore diameter.

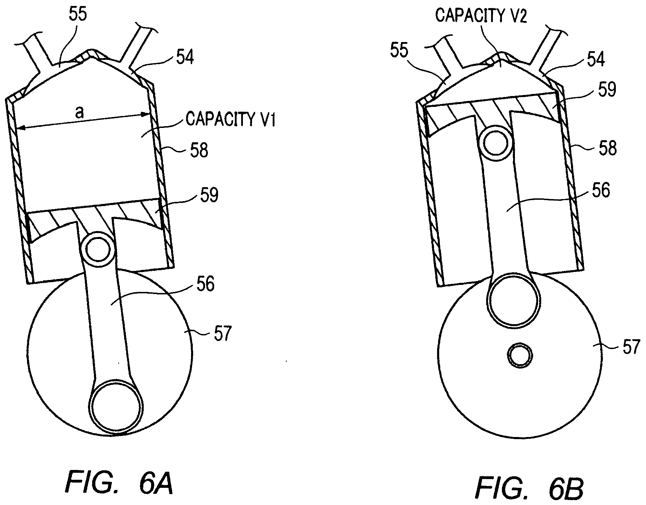

FIGS. 6A and 6B are diagrams describing definition of the bore diameter and the compression ratio. FIG. 6A illustrates a state that the piston is at the bottom dead center, and FIG. 6B illustrates a state that the piston is at the top dead center. FIGS. 6A and 6B illustrate cross sections of cylinder 58 and piston 59 of engine 51 cut along the central axis (cylindrical central axis of cylinder 58). In FIGS. 6A and 6B, reference numeral 58 denotes cylinder, 59 denotes piston, 54 denotes intake valve, 55 denotes exhaust valve, 56 denotes connecting rod, and 57 denotes crank.

The bore diameter denotes inside diameter "a" of cylinder 58 as shown in FIGS. 6A and 6B. The compression ratio denotes a ratio of capacity V1 when the volume is the largest with piston 59 at the bottom dead center and capacity V2 when the volume is the smallest with piston 59 at the top dead center in a combustion chamber of cylinder 58 partitioned by piston 59.

<Details of ECU>

As shown in FIG. 2, ECU 20 includes: knock interface circuit 21 that receives a signal of knock sensor 10; interface circuit 22 that receives a signal of crank angle sensor 60; and microcomputer 23.

Knock interface circuit 21 is a circuit that extracts a signal value for detecting knocking from a detection signal of knock sensor 10 to transmit the signal value to microcomputer 23. Knock interface circuit 21 includes gain adjustment section 211, filter processing section (also called signal extraction section) 212, rectification processing section 213, and peak hold processing section 214.

Gain adjustment section 211 adjusts the gain of the detection signal of knock sensor 10. The gain is adjusted, for example, to adjust the level of the detection signal that changes according to the engine speed or to adjust the level of the detection signal that changes based on the individual difference of knock sensor 10.

Filter processing section 212 includes, for example, an analog band-pass filter circuit. The analog band-pass filter circuit is an active filter including only one operational amplifier. According to the configuration, a signal of specific frequency components can be extracted at a large gain, and the cost can be reduced. Band-pass characteristics of filter processing section 212 will be described later.

Rectification processing section 213 rectifies a detection signal of an AC waveform passed through filter processing section 212.

Peak hold processing section 214 holds and outputs the peak voltage of the detection signal in a signal extraction period designated by a timing signal of window control section 237.

Interface circuit 22 adjusts the waveform of the output signal of crank angle sensor 60 and outputs the waveform to microcomputer 23.

Microcomputer 23 includes knock determination value computation section 231, knock determination section 232, ignition timing computation section 234, fuel injection computation section 235, actuator control section 236, and window control section 237. Ignition timing computation section 234, fuel injection computation section 235, and actuator control section 236 form a combustion control section that controls the combustion of engine 51. The combustion control section may include one of or a combination of a plurality of ignition timing computation section 234, fuel injection computation section 235, and actuator control section 236.

The elements in microcomputer 23 may be formed by software executed by a CPU (central processing unit) or may be formed by hardware such as a DSP (digital signal processing circuit).

Window control section 237 receives a crank angle signal from crank angle sensor 60 and controls processing timing of each section. Specifically, window control section 237 outputs a timing signal indicating a signal extraction period to peak hold processing section 214. Window control section 237 further outputs a timing signal to knock determination value computation section 231 and knock determination section 232 for acquiring a signal.

Knocking may occur immediately before the piston reaches the top dead center until the completion of the combustion of the combustion chamber. Therefore, window control section 237 outputs a timing signal to peak hold processing section 214 for executing peak hold operation in this period. While the output of peak hold processing section 214 is held after the termination of the period, window control section 237 further outputs a timing signal to knock determination value computation section 231 and knock determination section 232 for acquiring a signal.

Knock determination value computation section 231 and knock determination section 232 execute a knock determination process described later to determine that knocking occurs. Knock determination section 232 notifies ignition timing computation section 234, fuel injection computation section 235, and actuator control section 236 of the determination result.

Ignition timing computation section 234 executes a knocking countermeasure control process described later to control ignition unit 40.

Fuel injection computation section 235 controls fuel injection unit 30. Fuel injection computation section 235 may execute a knocking countermeasure control process of adjusting the fuel injection quantity in response to the occurrence of knocking when it is determined that knocking occurs.

Actuator control section 236 controls EGR valve 50. Actuator control section 236 may execute a knocking countermeasure control process of adjusting the opening of the EGR valve in response to the occurrence of knocking when it is determined that knocking occurs.

<Details of Filter Processing Section>

The band-pass characteristics of filter processing section 212 will be described.

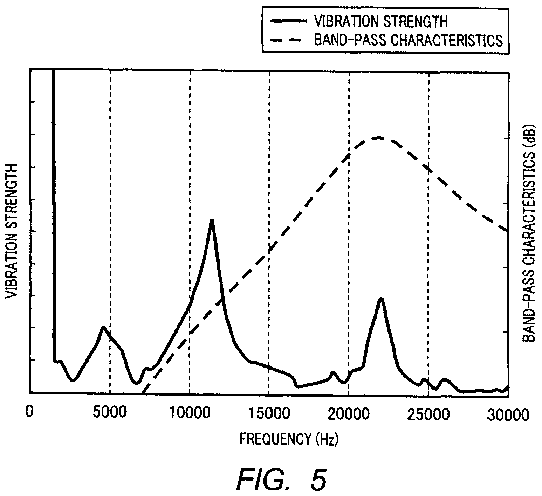

FIG. 5 is a frequency characteristic diagram describing an example of the band-pass characteristics of the filter processing section of FIG. 2.

Filter processing section 212 has band-pass characteristics of passing signal components in the ultrasonic range with a larger gain than signal components in the audible range. Specifically, filter processing section 212 has a mountain-shape characteristic curve including the pass-band peak at the natural vibration frequency of the secondary knocking vibration in the ultrasonic range. The gain includes scaling factors of 1 or more and less than 1.

Due to the band-pass characteristics, the signal of the secondary knocking vibration in the ultrasonic range is transmitted to latter circuits through filter processing section 212 in the engine cycle in which knocking occurs. The signal of the mechanical vibration, the signal of the primary knocking vibration, and the signal of the normal combustion vibration included in the audible range are significantly attenuated by filter processing section 212.

On the other hand, the signal of the mechanical vibration and the signal of the normal combustion vibration generated in the primary knocking frequency band included in the audible range are significantly attenuated by filter processing section 212 in the engine cycle in which no knocking occurs. Only a small noise signal is generated in the ultrasonic range of 18 kHz to 25 kHz, and the strength of the signal transmitted to the later circuits through filter processing section 212 is extremely low.

As a result, there is a large difference between the signal passed through filter processing section 212 when knocking occurs and the signal passed through filter processing section 212 when no knocking occurs. Therefore, small knocking can be relatively easily detected.

The band-pass characteristics of filter processing section 212 are not limited to the example of FIG. 5. For example, the pass curve of filter processing section 212 may be a trapezoidal pass curve that is substantially flat in the pass-band, instead of the mountain shape. The peak frequency of the pass curve and the natural vibration frequency of the secondary knocking vibration do not have to coincide, and the frequencies may be deviated.

<Knock Determination Process>

An example of the knock determination process executed by ECU 20 of the present embodiment will be described.

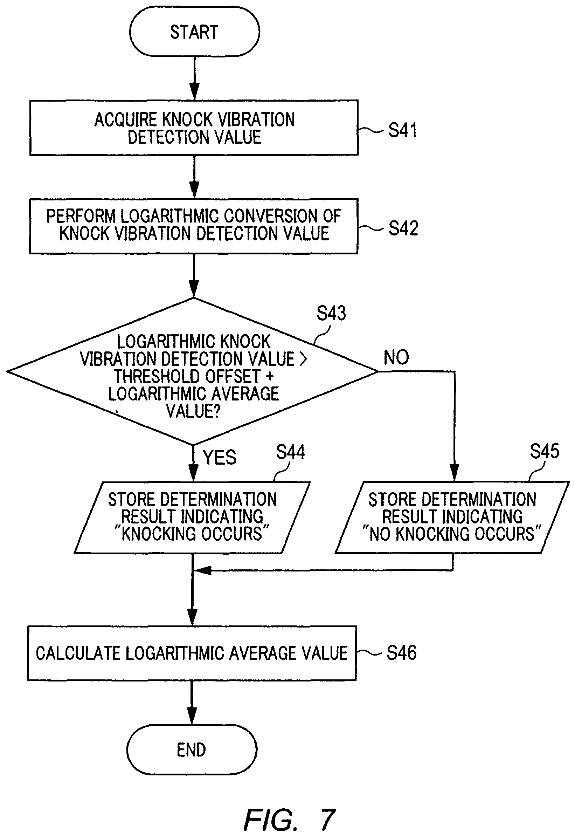

FIG. 7 is a flowchart showing the knock determination process.

The knock determination process of FIG. 7 is started at a predetermined timing in one cycle of engine 51 and is repeatedly executed in each cycle of engine 51.

When the knock determination process is started, knock determination value computation section 231 and knock determination section 232 acquire the output of knock interface circuit 21 as a knock vibration detection value based on the timing signal of window control section 237 in step S41. Specifically, microcomputer 23 applies A/D (analog/digital) conversion to the output of knock interface circuit 21, and the converted digital value is acquired.

In step S42, knock determination value computation section 231 and knock determination section 232 perform logarithmic conversion of the acquired knock vibration detection value to calculate a logarithmic knock vibration detection value.

In step S43, knock determination section 232 compares the logarithmic knock vibration detection value with a knock determination threshold (= threshold offset + logarithmic average value) to determine whether the logarithmic knock vibration detection value is larger. The process of step S43 is an example of the process of determining that knocking occurs. The logarithmic average value is a value calculated by knock determination value computation section 231 in step S46. The threshold offset is a certain value defined in advance by experiment or the like.

As a result of the comparison, if the logarithmic knock vibration detection value is larger, knock determination section 232 holds the determination result indicating the occurrence of knocking in a memory or the like (step S44). The determination result held by knock determination section 232 is output to ignition timing computation section 234, fuel injection computation section 235, and actuator control section 236.

On the other hand, if the logarithmic knock vibration detection value is smaller, knock determination section 232 holds the determination result indicating no occurrence of the occurrence of knocking in the memory or the like (step S45). The determination result held by knock determination section 232 is output to ignition timing computation section 234, fuel injection computation section 235, and actuator control section 236.

The processes of steps S44 and S45 can be omitted by switching the determination process of step S43 to the control process in response to the occurrence of knocking.

In step S46, knock determination value computation section 231 calculates an average value of a plurality of knock vibration detection values acquired in a plurality of past engine cycles and performs logarithmic conversion of the average value to calculate a logarithmic average value. One knock determination process is thus finished.

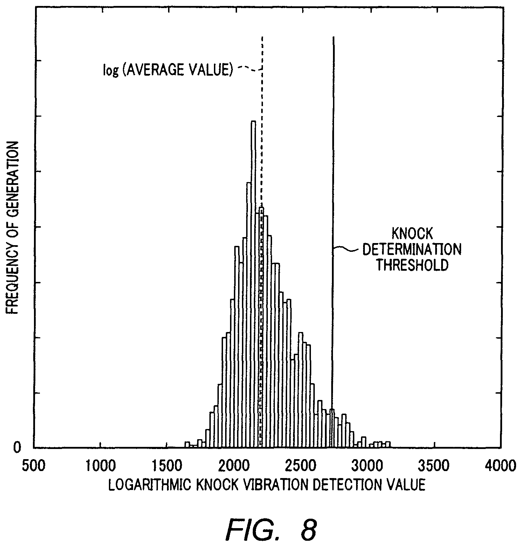

FIG. 8 is a diagram describing the knock determination process. The horizontal axis of FIG. 8 indicates the logarithmic knock vibration detection value, and the vertical axis indicates the frequency in the plurality of past engine cycles.

As described, the knock vibration detection value is a signal value extracted from the detection signal of knock sensor 10 in the period during which knocking may possibly occur. Therefore, when the logarithmic knock vibration detection values are acquired and calculated over a plurality of engine cycles, the logarithmic knock vibration detection values are distributed in a low range as shown in a histogram of FIG. 8. In this case, the logarithmic knock vibration detection value is a value higher than the distribution if knocking occurs.

Although the tendency of the distribution of the logarithmic knock vibration detection values does not change much, the absolute value of the range including the distribution of the logarithmic knock vibration detection values is changed by external factors, such as engine speed and individual variations of knock sensor 10.

Therefore, in the knock determination process of FIG. 7, the logarithmic average value is calculated from the population of the knock vibration detection values acquired over a plurality of engine cycles (step S46), and the threshold offset is added to the logarithmic average value to determine the knock determination threshold (step S43). In the knock determination process of FIG. 7, the sizes of the knock determination threshold and the logarithmic knock vibration detection value are compared (step S43), and a knock vibration detection value larger than the value in the normal distribution due to knocking is discriminated to determine that knocking occurs.

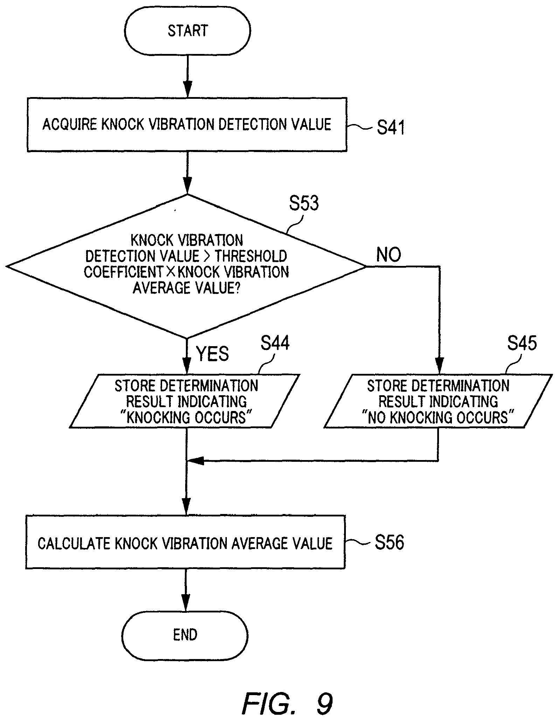

FIG. 9 is a flowchart showing a variation of the knock determination process.

The knock determination process can be changed as shown in FIG. 9. Although the logarithmically converted knock vibration detection value is used to execute the statistical processing and the comparison process in the knock determination process of FIG. 7, the statistical processing and the comparison process are executed without performing the logarithmic conversion in the knock determination process of FIG. 9.

In the example of FIG. 9, knock determination value computation section 231 calculates an average value of the knock vibration detection values obtained over a plurality of engine cycles (step S56). Knock determination section 232 multiplies the average value of the knock vibration detection values by a threshold coefficient determined in advance by experiment or the like to calculate the knock determination threshold (step S53).

The value obtained by applying logarithmic conversion to the threshold coefficient is equivalent to the threshold offset of step S43 of FIG. 7.

Knock determination section 232 can compare the latest knock vibration detection value with the knock determination threshold (step S53) to determine that knocking occurs as in the case of FIG. 7. In FIG. 9, steps provided with the same reference numerals as in FIG. 7 are the same as corresponding steps of FIG. 7.

<Size of Detection Target of Knocking Vibration>

The size of the knocking vibration that can be detected in the knock determination process will be described.

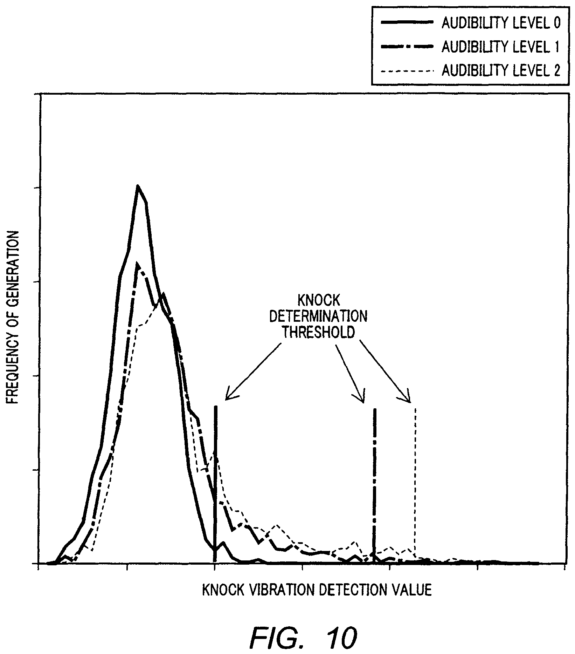

FIG. 10 is a diagram describing a relationship between audibility levels of the knocking vibration to be determined and knock determination thresholds.
The knocking occurs in various sizes. Small knocking gives almost no damage to engine 51. However, the small knocking gives a harsh feeling to the driver and the like.
The graph of FIG. 10 illustrates a distribution of knock determination thresholds and knock vibration detection values when knocking in three types of sizes is determined.
To determine relatively large knocking and to determine medium or larger knocking, the knock determination thresholds can be set distant from the distribution of the knock vibration detection values as indicated by the graph lines of audibility levels 2 and 1 of FIG. 10, respectively.
On the other hand, to determine extremely small knocking, the knock determination threshold needs to be set near the distribution of the knock vibration detection values as indicated by the graph line of audibility level 0.
Therefore, when the knock determination threshold is set near the distribution of the knock vibration detection values as indicated by the graph line of audibility level 0, erroneous determination of knocking is easily generated if a signal with vibration different from knocking is input to knock determination value computation section 231.
However, in this embodiment, the bore diameter of engine 51 is set so that the secondary knocking vibration is in the ultrasonic range as shown in FIG. 3. Furthermore, in the present embodiment, filter processing section 212 has band-pass characteristics of significantly attenuating the signal in the audible range with frequent generation of mechanical vibration, normal combustion vibration, and the like and passing the signal in the ultrasonic range with a large gain as shown in FIG. 5.
Therefore, in this embodiment, extremely small knocking can be determined with less erroneous determination even if the knock determination threshold is set near the distribution of the knock vibration detection values, as indicated by the graph line of audibility level 0 of FIG. 10.
The knock determination process is just an example, and various other methods may be applied to determine that knocking occurs from the signal value acquired by knock interface circuit 21.

<Knocking Countermeasure Control Process>

An example of the knocking countermeasure control process executed by ECU 20 of the present embodiment will be described.

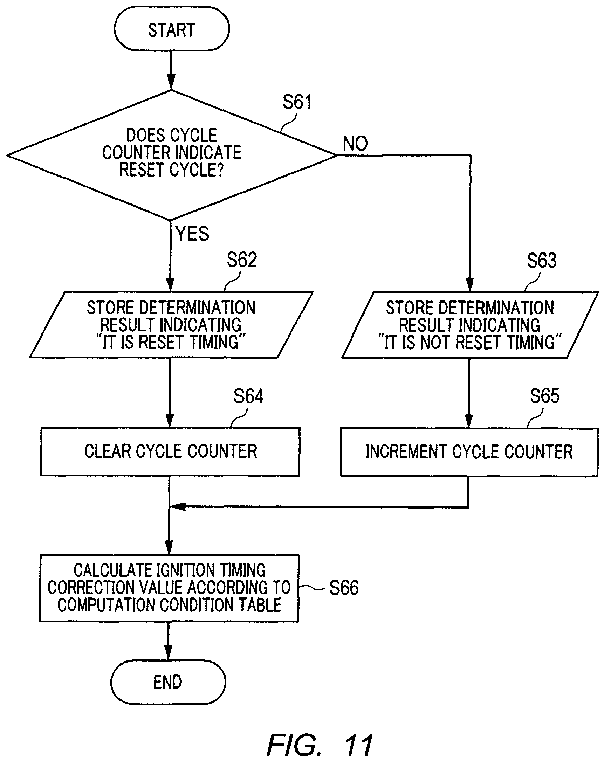

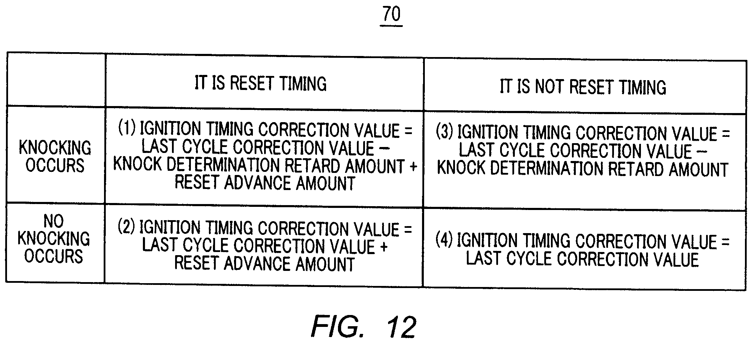

FIG. 11 is a flowchart showing the knocking countermeasure control process. FIG. 12 is a computation condition table describing a calculation process of step S66 of FIG. 11.

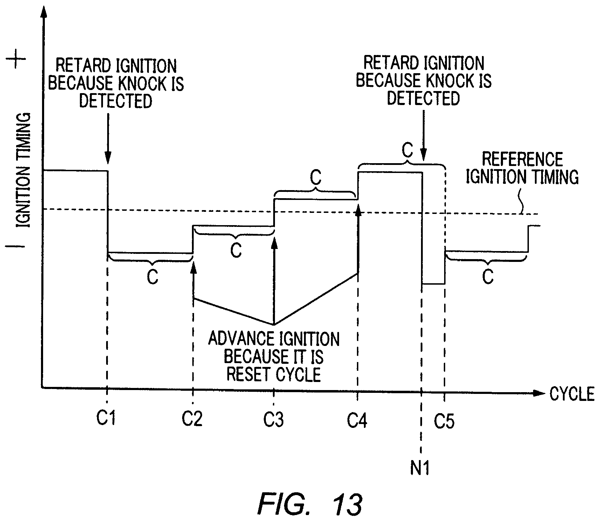

FIG. 13 is a timing chart describing an example of the knocking countermeasure control process.
The knocking countermeasure control process is started at a predetermined timing in one cycle of engine 51 and is repeatedly executed in each cycle of engine 51.
As shown in FIG. 13, the knocking countermeasure control process is a process of correcting the ignition timing from reference ignition timing based on the determination of the occurrence of knocking.
Specifically, as shown in FIG. 13, the ignition timing is retarded from the reference ignition timing by a certain amount (hereinafter, called "knock determination retard amount") if it is determined that knocking occurs. If a period during which no knocking is determined to occur for a predetermined period C (hereinafter, called "reset cycle"), the ignition timing is advanced by an advance amount (hereinafter, called "reset advance amount") smaller than the knock determination retard amount.
The reference ignition timing is a standard ignition timing determined based on the number of revolutions of engine 51 and the like.
When the knocking countermeasure control process of FIG. 11 is started, ignition timing computation section 234 first determines whether a cycle counter that counts the engine cycle indicates the reset cycle (termination cycle of period C of FIG. 13) in step S61.
If the result of the determination is affirmative, ignition timing computation section 234 holds the determination result indicating that it is the reset timing in the memory or the like in step S62.
Ignition timing computation section 234 clears the cycle counter in step S64.
On the other hand, if the determination result of step S61 is negative, ignition timing computation section 234 holds the determination result indicating that it is not the reset timing in the memory or the like in step S63.
Ignition timing computation section 234 increments the cycle counter in step S65.

The processes of steps S62 and S63 can be omitted by immediately switching the determination process of step S61 to the control process according to the determination result.

In step S66, ignition timing computation section 234 calculates an ignition timing correction value according to computation condition table 70 (see FIG. 12). The computation condition is determined from the knocking determination result held in the memory or the like in the knock determination process of FIG. 7 and from the determination result indicating whether it is the reset timing held in the memory or the like in step S62 or S63 of FIG. 11.

More specifically, if it is determined that it is the reset timing and that knocking occurs, ignition timing computation section 234 calculates the ignition timing correction value by "last cycle correction value - knock determination retard amount + reset advance amount" as shown in field (1) of FIG. 12. As a result of the calculation, the ignition timing is retarded by "knock determination retard amount - reset advance amount" (see cycle C1 of FIG. 13) in the cycle in which it is determined that knocking occurs, and frequent occurrence of knocking is prevented.

As shown in field (2) of FIG. 12, if it is determined that it is the reset timing and that no knocking occurs, ignition timing computation section 234 calculates the ignition timing correction value by "last cycle correction value + reset advance amount". As a result of the calculation, the ignition timing gradually advances in the cycles in which no knocking occurs for a while (cycles C2, C3, C4, and C5 of FIG. 13), and engine 51 is combusted more efficiently.

As shown in field (3) of FIG. 12, if it is determined that it is not the reset timing and that knocking occurs, ignition timing computation section 234 calculates the ignition timing correction value by "last cycle correction value - knock determination retard amount." As a result of the calculation, the ignition timing is retarded by "knock determination retard amount" (see cycle N1 of FIG. 13) without a delay if it is determined that knocking occurs, and frequent occurrence of knocking is prevented.

As shown in field (4) of FIG. 12, if it is determined that it is not the reset timing and that no knocking occurs, ignition timing computation section 234 sets the ignition timing correction value to the same value as the correction value of the last cycle and does not change the ignition timing correction value.

Once the ignition timing correction value is calculated, ignition timing computation section 234 outputs a timing signal to ignition unit 40 at a timing reflecting the correction value to ignite the ignition plug.

In the calculation process of the ignition timing correction value of FIG. 11 (step S66), a maximum value and a minimum value of the ignition timing correction amount may be set to prevent the ignition timing from exceeding the appropriate range. The ignition timing correction amount may be set to the maximum value if the ignition timing correction amount exceeds the maximum value as a result of the calculation process, and the ignition timing correction amount may be set to the minimum value if the ignition timing correction amount is below the minimum value.

According to the knock determination process (FIG. 7) and the knocking countermeasure control process (FIG. 11), the ignition timing is retarded without a delay if it is determined that knocking occurs as shown in FIG. 13, and frequent occurrence of knocking is prevented afterward. The ignition timing is gradually advanced if the occurrence of knocking is not detected. According to the control, the ignition timing is controlled near the knocking limit, and the fuel efficiency and the output characteristics of engine 51 are fully improved.

The knocking countermeasure control process is just an example, and various other well-known methods may be applied. Although the method of adjusting the ignition timing for efficient combustion without frequent occurrence of knocking is adopted as the knocking countermeasure control process, other methods of adjusting the fuel injection quantity, adjusting the opening of the EGR valve, and a combination of these adjustments may be adopted.

As described, according to saddle-riding type vehicle 1 and the power unit of the embodiment of the present teaching, the knocking vibration of engine 51 is generated in the audible range and the ultrasonic range. Filter processing section 212 obtains a signal by extracting the ultrasonic range with a larger gain than the audible range from the detection signal of knock sensor 10. The extracted signal is a signal favorably reflecting the knocking vibration distributed in the ultrasonic range, with a little noise such as mechanical vibration and normal combustion vibration of engine 51.

Therefore, the determination of the occurrence of knocking using the extracted signal allows accurate determination of the occurrence of knocking in extremely low audibility level 0, and efficient combustion control of engine 51 is realized without frequent occurrence of small knocking.

According to saddle-riding type vehicle 1 and the power unit of the embodiment of the present teaching, the natural vibration frequency of the primary knocking vibration is included in the audible range, and the natural vibration frequency of the secondary knocking vibration is included in the ultrasonic range based on the setting of the bore diameter of engine 51. Although the knocking countermeasure control prevents frequent occurrence of knocking, sporadic occurrence of knocking is inevitable. Therefore, if the natural vibration frequencies of the primary and secondary knocking vibrations are in the audible range, the occasionally occurring knocking causes a large harsh feeling for human hearing. However, only the primary knocking vibration is in the audible range, and the secondary knocking vibration is in the ultrasonic range in the present embodiment. Therefore, the harsh feeling caused by the occasionally occurring knocking can be reduced.

<Variations>

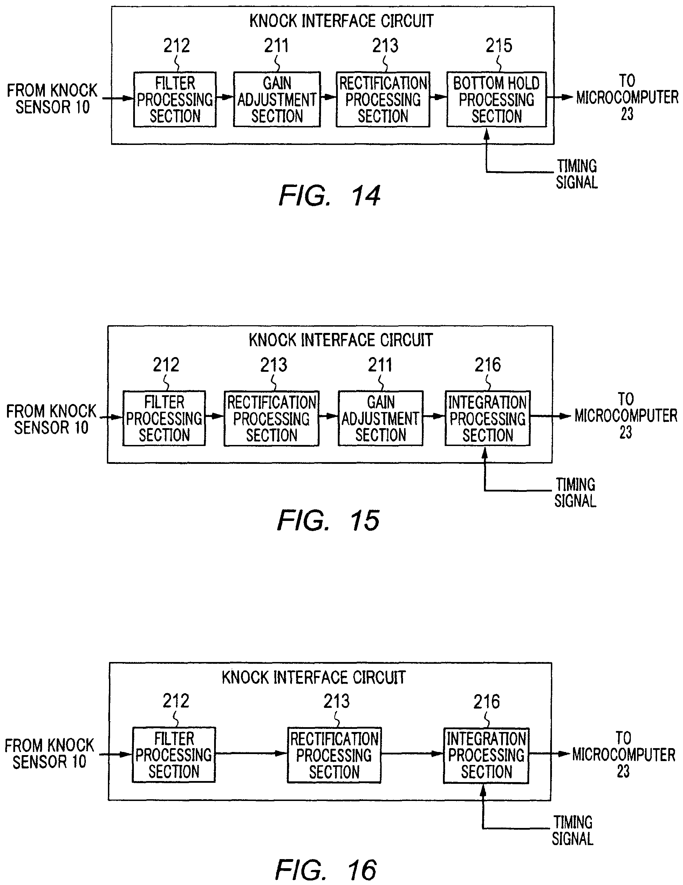

FIGS. 14 to 16 are block diagrams showing Variations 1 to 3 of the knock interface circuit.

Knock interface circuit 21 provided in ECU 20 is not limited to the configuration of FIG. 2, and various changes can be made.

For example, as shown in FIGS. 14 and 15, gain adjustment section 211 may be provided between filter processing section 212 and rectification processing section 213 or may be provided in a latter part of rectification processing section 213.

Gain adjustment section 211 can be omitted as shown in FIG. 16 if the resolution power of the A/D converter of microcomputer 23 is high or if the fluctuation in the output level of knock sensor 10 is small.

In knock interface circuit 21 of FIG. 2, peak hold processing section 214 holds and outputs the peak of the signal waveform. However, as shown in FIG. 14, rectification processing section 213 may rectify a signal to negative voltage, and bottom hold processing section 215 may hold and output the lowest voltage (bottom voltage).

Integration processing section 216 that integrates rectified vibration signals may be provided in place of peak hold processing section 214 or bottom hold processing section 215. In this case, integration processing section 216 can execute an integration process in a period designated by a timing signal and then output a signal of an integration result.

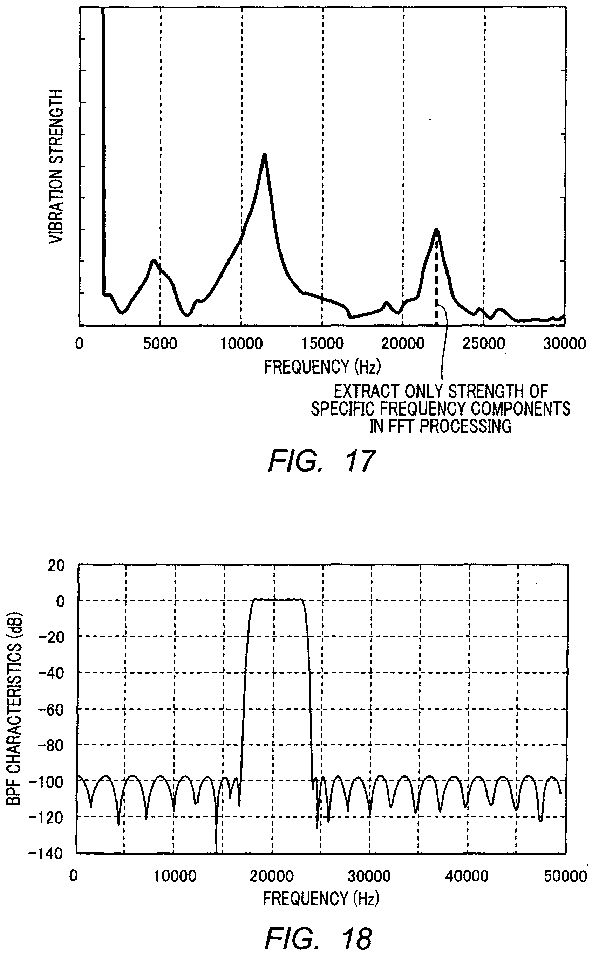

FIGS. 17 and 18 are diagrams describing Variations 1 and 2 of the filter processing section.

Filter processing section 212 is not limited to the configuration in which an analog band-pass filter circuit passes a signal in a desired frequency band, and various changes can be made.

For example, filter processing section 212 may include: an FFT (Fast Fourier Transform) circuit that passes a signal in a desired frequency band; and a computation circuit that attenuates or does not pass signal components in other frequency bands.

In this case, as shown in FIG. 17, the FFT circuit may have extraction characteristics of extracting signal components of the natural vibration frequency of the secondary knocking signal. The FFT circuit may have characteristics of extracting signal components of a frequency deviated a little from the natural vibration frequency of the secondary knocking signal. The FFT circuit may have characteristics of extracting signal components in a frequency band including the natural vibration frequency of the secondary knocking signal or including a frequency near the natural vibration frequency.

Filter processing section 212 may further include, for example, a digital band-pass filter circuit to pass a signal in a desired frequency band and attenuate signal components in other frequency bands. In this case, as shown in FIG. 18, the pass-band of the band-pass filter circuit can be set to a frequency band in the ultrasonic range including the natural vibration frequency of the secondary knocking signal. The pass-band may not include the natural vibration frequency if the neighborhood of the natural vibration frequency of the secondary knocking signal is included. The pass-band may include a frequency band in the audible range if the frequency band is smaller than that of the ultrasonic range.

A preferred embodiment has been described thus far.

The configurations and the methods specifically described in the embodiment described above can be appropriately changed without departing from the gist of the teaching.

For example, the saddle-riding type vehicle according to the present teaching is not limited to the motorcycle of the type shown in FIG. 1, and the saddle-riding type vehicle also includes a scooter-type vehicle in which the knees can be kept together. The number of wheels of the saddle-riding type vehicle according to the present teaching is not limited to two, and the number of wheels may be three, four, for example, as long as the vehicle is a saddle-riding type.

Although a four-stroke air-cooled engine is adopted as the engine in the example described in the embodiment, the engine may be a two-stroke engine, and the present teaching can also be applied to a water-cooled engine.

A non-resonant sensor is adopted as the knock sensor in the example described in the embodiment. However, a resonant knock sensor in which the gain of the resonance frequency band is high may be adopted. In this case, the resonance frequency band can be set to a band similar to the pass-band of filter processing section 212 of the embodiment, and filter processing section 212 can be omitted. Therefore, the knock sensor also serves as a signal extraction section that extracts components in the ultrasonic range with a large gain in this case.

An example of the configuration of the engine in which the natural vibration frequency of the secondary knocking vibration is completely in the ultrasonic range is illustrated in the embodiment. However, the natural vibration frequency of the primary knocking vibration may be set to 10 kHz or greater and close to 10 kHz, and the natural vibration frequency of the second knocking vibration may be set near the starting end of the ultrasonic range, such as 18 kHz, in the engine. The same effects as those of the embodiment described above can be attained in this configuration.

Although only the signal in which the frequency components in the ultrasonic range are extracted with a larger gain than in the audible range is used to determine that knocking occurs in the embodiment, the present teaching is not limited to this embodiment. The present teaching includes a power unit and a vehicle that determine that knocking occurs by using at least a signal in which the frequency components in the ultrasonic range are extracted with a larger gain than in the audible range. For example, the present teaching also includes a configuration of determining that knocking occurs by using a signal in which the frequency components in the ultrasonic range are extracted with a larger gain than in the audible range under a predetermined condition, while determining that knocking occurs by using a signal of knocking vibration in the audible range under another condition. The present teaching also includes a configuration of determining that knocking occurs by using a signal in the audible range extracted at a large gain, in addition to the signal in which the frequency components in the ultrasonic range are extracted with a larger gain than in the audible range. The present teaching may also be combined with other techniques for improving the determination accuracy if the occurrence of knocking is determined by using at least the signal in which the frequency components in the ultrasonic range are extracted with a larger gain than in the audible range, and the present teaching also includes configurations of such combinations.

The value of the bore diameter described in the embodiment is not unambiguously determined by the exhaust volume of the engine and the like. For example, even if the exhaust volume of the engine is determined, the bore stroke and the number of cylinders can be selected to set the bore diameter to the value of the present teaching. More specifically, although the bore diameter of the engine is set to equal to 60 mm or less in the embodiment, the amount of stroke of the piston and the number of cylinders can be adjusted to obtain an arbitrary exhaust volume. Usually, the bore diameter is one of the factors that significantly affect the performance of the engine, and the value is not just a simple design matter.

Although various filter circuits are illustrated as a configuration (will be called signal extraction section) that extracts the components in the ultrasonic range with a larger gain than the components in the audible range from the detection signal of knock sensor 10 in the embodiment described above, the signal extraction section may be formed by hardware or may be formed by software.

In the example described in the embodiment, one ECU 20 includes the configuration of extracting the frequency components in the ultrasonic range with a large gain from the detection signal of knock sensor 10, the configuration of determining that knocking occurs, and the configuration of controlling the combustion based on the determination result, in the control apparatus that controls the combustion of engine 51. However, one or a plurality of the configurations may be separated from each other and connected by signal lines or the like.

According to the present teaching, the "determination of occurrence of knocking" includes various modes. For example, the determination of the occurrence of knocking includes a mode of determining that knocking occurs from the detection signal of the knock sensor. The determination of the occurrence of knocking includes a mode of determining that no knocking occurs from the detection signal of the knock sensor. The method for determining that knocking occurs includes a mode of comparing the value obtained by processing the detection signal of the knock sensor with a reference value experimentally defined as a value indicating the occurrence of knocking. A value calculated by an experimentally defined method as a value indicating the occurrence of knocking may be used as the reference value. The method for determining that knocking occurs further includes a mode of determining that knocking occurs if the value obtained by processing the detection signal of the knock sensor is greater than the reference value. The method for determining that knocking occurs also includes a mode of determining that no knocking occurs if the value obtained by processing the detection signal of the knock sensor is smaller than the reference value.

Industrial Applicability

The present invention can be used for a saddle-riding type vehicle such as a motorcycle, and for a power unit of the saddle-riding type vehicle.

Reference Signs List

| | |
|---|---|
| 1 | Saddle-riding type vehicle |
| 3 | Front wheel |
| 4 | Rear wheel |
| 5 | Engine unit |
| 7 | Seat |
| 10 | Knock sensor |
| 20 | ECU |
| 21 | Knock interface circuit |
| 23 | Microcomputer |
| 40 | Ignition unit |
| 51 | Engine |
| 52 | Power transmission section |
| 58 | Cylinder |

60      Crank angle sensor
231     Knock determination value computation section
232     Knock determination section
234     Ignition timing computation section
237     Window control section
a       Bore diameter


**Claims**

1.  A power unit of a saddle-riding type vehicle, the power unit comprising:

    an engine (51); and
    a control apparatus (20) that controls combustion of the engine (51), wherein:

       the engine (51) is configured so that vibration in an audible range and vibration in an ultrasonic range are generated by knocking;
       the control apparatus (20) includes a knock sensor (10) that detects vibration of the engine;
       the control apparatus (20) is adapted to extract components in the ultrasonic range with a larger gain than that of components in the audible range from a detection signal of the knock sensor (10);
       the control apparatus (20) is adapted to determine occurrence of knocking based on the detection signal of the knock sensor (10) in which the components in the ultrasonic range are extracted with a larger gain than that of the components in the audible range; and
       the control apparatus (20) is adapted to control the combustion of the engine (51) based on a determination result of the occurrence of knocking.

2.  A power unit of the saddle-riding type vehicle according to claim 1, wherein the engine (51) is configured so that a bore diameter (a) of the engine (51) is equal to or less than 60 mm.

3.  A power unit of the saddle-riding type vehicle according to claim 1 or 2, wherein the engine (51) is configured so that a frequency band that is a lowest frequency band among a plurality of frequency bands in which peaks of knocking vibration are distributed is equal to or greater than 10 kHz.

4.  A power unit of the saddle-riding type vehicle according to at least one of the claims 1 to 3, wherein the engine (51) is configured so that a frequency band that is a second lowest frequency band among the plurality of frequency bands in which peaks of knocking vibration are distributed is in the ultrasonic range.

5.  A power unit of the saddle-riding type vehicle according to at least one of the claims 1 to 4, wherein the control apparatus (20) further includes an analog or digital band-pass filter circuit in which majority of a pass-band is set to the ultrasonic range.

6.  A power unit of the saddle-riding type vehicle according to at least one of the claims 1 to 5, wherein the control apparatus (20) further includes an analog or digital band-pass filter circuit that has a pass-band peak in the ultrasonic range.

7.  A power unit of the saddle-riding type vehicle according to at least one of the claims 1 to 6, wherein the control apparatus (20) further includes a computation circuit that is adapted to apply a Fourier transform to the detection signal of the knock sensor (10) to extract components of the ultrasonic range.

8.  A saddle-riding type vehicle comprising the power unit according to at least one of the claims 1 to 7, wherein at least part of the power unit is exposed on a side of the vehicle.

9.  A method for controlling a power unit of a saddle-riding type vehicle having an engine (51) and a knock sensor (10) adapted to detect vibration of the engine (51) in an audible range and vibration in an ultrasonic range that are generated by knocking, the method comprises:

    extracting components in the ultrasonic range with a larger gain than that of components in the audible range from a detection signal of the knock sensor (10);

determining occurrence of knocking based on the detection signal of the knock sensor (10) in which the components in the ultrasonic range are extracted with a larger gain than that of the components in the audible range; and

controlling the combustion of the engine (51) based on a determination result of the occurrence of knocking.

10. A method for controlling a power unit according to claim 9, wherein a frequency band that is a lowest frequency band among a plurality of frequency bands in which peaks of knocking vibration are distributed is equal to or greater than 10 kHz.

11. A method for controlling a power unit according to claim 9 or 10, wherein a frequency band that is a second lowest frequency band among the plurality of frequency bands in which peaks of knocking vibration are distributed is in the ultrasonic range.

12. A method for controlling a power unit according to at least one of the claims 9 to 11, wherein an analog or digital band-pass filter circuit is provided in which majority of a pass-band is set to the ultrasonic range.

13. A method for controlling a power unit according to at least one of the claims 9 to 12, wherein an analog or digital band-pass filter circuit is provided that has a pass-band peak in the ultrasonic range.

14. A method for controlling a power unit according to at least one of the claims 9 to 13, wherein a computation circuit is provided that applies a Fourier transform to the detection signal of the knock sensor (10) to extract components of the ultrasonic range.

**Patentansprüche**

1. Eine Leistungseinheit für ein Sattel-Reit-Typ-Fahrzeug, die Leistungseinheit umfasst:

   einen Motor (51); und
   ein Steuergerät (20), welches Verbrennung des Motors (51) steuert, wobei:

      der Motor (51) ist konfiguriert, sodass Vibrationen in einem hörbaren Bereich und Vibrationen in einem Ultraschallbereich durch Klopfen erzeugt sind;
      das Steuergerät (20) beinhaltet einen Klopfsensor (10) der Vibrationen des Motors erfasst;
      das Steuergerät (20) ist angepasst, um Komponenten des Ultraschallbereichs mit einer größeren Verstärkung als die von Komponenten des hörbaren Bereichs von einem erfassten Signal des Klopfsensors (10) zu extrahieren;
      die Steuervorrichtung (20) ist angepasst, um Auftreten von Klopfen auf Grundlage des Erfassungssignals des Klopfsensors (10) zu bestimmen, in dem die Komponenten in dem Ultraschallbereich mit einer größeren Verstärkung als die, der Komponenten in dem hörbaren Bereich extrahiert sind; und
      das Steuergerät (20) ist angepasst um die Verbrennung des Motors (51) auf Grundlage eines Bestimmungsergebnisses des Auftretens von Klopfen zu steuern.

2. Eine Leistungseinheit für das Sattel-Reit-Typ-Fahrzeug gemäß Anspruch 1, wobei der Motor (51) konfiguriert ist sodass ein Bohrungsdurchmesser (a) des Motors (51) gleich oder weniger als 60 mm ist.

3. Eine Leistungseinheit des Sattel-Reit-Typ-Fahrzeugs gemäß Anspruch 1 oder 2, wobei der Motor (51) konfiguriert ist, sodass ein Frequenzband, das ein niedrigstes Frequenzband von einer Mehrzahl von Frequenzbändern ist, in dem Spitzen von Klopfvibration gleich oder größer als 10 kHz verteilt sind.

4. Eine Leistungseinheit für das Sattel-Reit-Typ-Fahrzeug gemäß zumindest einem der Ansprüche 1 bis 3, wobei der Motor (51) konfiguriert ist, sodass ein Frequenzband, das ein zweit-niedrigstes Frequenzband von der Mehrzahl von Frequenzbändern ist, in dem Spitzen der Klopfvibration in dem Ultraschallbereich verteilt sind.

5. Eine Leistungseinheit des Sattel-Reit-Typ-Fahrzeugs gemäß irgendeinem der Ansprüche 1 bis 4, wobei das Steuergerät (20) weiterhin einen analogen oder digitalen Band-Pass-Filter-Schaltkreis beinhaltet in dem die Mehrheit eines Pass-Bandes auf den Ultraschallbereich gesetzt ist.

**6.** Eine Leistungseinheit für das Sattel-Reit-Typ-Fahrzeug gemäß zumindest einem der Ansprüche 1 bis 5, wobei das Steuergerät (20) weiterhin einen Analog- oder Digital-Band-Pass-Filter-Schaltkreis beinhaltet, der eine Pass-Band-Spitze in dem Ultraschallbereich hat.

**7.** Eine Leistungseinheit von dem Sattel-Reit-Typ-Fahrzeug gemäß zumindest einem der Ansprüche 1 bis 6, wobei das Steuergerät (20) weiterhin einen Berechnungs-Schaltkreis beinhaltet, der angepasst ist um eine Fourier-Transformation auf das Erfassungssignal des Klopfsensors (10) anzuwenden, um Komponenten des Ultraschallbereichs zu extrahieren.

**8.** Ein Sattel-Reit-Typ-Fahrzeug welches eine Leistungseinheit gemäß zumindest einem der Ansprüche 1 bis 7, umfasst wobei zumindest ein Teil der Leistungseinheit an einer Seite des Fahrzeugs freigelegt ist.

**9.** Ein Verfahren zur Steuerung einer Leistungseinheit eines Sattel-Reit-Typ-Fahrzeugs das einen Motor (51) und einen Klopfsensor (10) hat, angepasst um Vibration des Motors (51) in einem hörbaren Bereich und Vibrationen in einem Ultraschallbereich welche durch Klopfen erzeugt sind, zu erfassen, das Verfahren umfasst:

Extrahieren von Komponenten in dem Ultraschallbereich mit einer größeren Verstärkung als die von Komponenten in dem hörbaren Bereich von einem Erfassungssignal des Klopfsensors (10);
Bestimmen von Auftreten von Klopfen auf Grundlage von dem Erfassungssignal des Klopfsensors (10) in dem die Komponenten in dem Ultraschallbereich mit einer größeren Verstärkung extrahiert sind als die Komponenten in dem hörbaren Bereich; und
Steuerung der Verbrennung des Motors (51) auf Grundlage eines Erfassungsergebnisses des Auftretens von Klopfen.

**10.** Ein Verfahren zur Steuerung einer Leistungseinheit gemäß Anspruch 9, wobei ein Frequenzband welches ein niedrigstes Frequenzband von einer Mehrzahl von Frequenzbändern ist, in dem Spitzen von Klopfvibrationen gleich oder größer als 10 kHz verteilt sind.

**11.** Ein Verfahren zu Steuerung einer Leistungseinheit gemäß Anspruch 9 oder 10 wobei ein Frequenzband das zweit-niedrigste Frequenzband von der Mehrzahl von Frequenzbändern ist, in den Spitzen von Klopfvibrationen in dem Ultraschallbereich verteilt sind.

**12.** Ein Verfahren zur Steuerung einer Leistungseinheit gemäß zumindest einem der Ansprüche 9 bis 11, wobei ein Analog- oder Digital-Band-Pass-Filter-Schaltkreis vorgesehen ist in dem eine Mehrheit von einem Pass-Band in den Ultraschallbereich gesetzt ist.

**13.** Ein Verfahren zur Steuerung einer Leistungseinheit gemäß zumindest einem der Ansprüche 9 bis 12, wobei ein Analog- oder Digital-Band-Pass-Filter-Schaltkreis vorgesehen ist der eine Pass-Band-Spitze im Ultraschallbereich hat.

**14.** Ein Verfahren zur Steuerung einer Leistungseinheit gemäß zumindest einem der Ansprüche 9 bis 13, wobei ein Berechnungs-Schaltkreis vorgesehen ist, der eine Fourier-Transformation auf das Erfassungssignal des Klopfsensors (10) aufbringt, um die Komponenten des Ultraschallbereichs zu extrahieren.

**Revendications**

**1.** Véhicule de type à selle, l'unité d'alimentation comprenant :

un moteur (51) ; et
un appareil de commande (20) qui commande la combustion du moteur (51), dans lequel :

le moteur (51) est configuré de sorte que la vibration dans une plage audible et la vibration dans une plage ultrasonique sont générées par cognement ;
l'appareil de commande (20) inclut un capteur de cognement (10) qui détecte la vibration du moteur ;
l'appareil de commande (20) est adapté pour extraire les composants dans la plage des ultrasons avec un gain supérieur à celui des composants dans la plage audible depuis un signal de détection du capteur de cognement (10) ;

l'appareil de commande (20) est adapté pour déterminer l'apparition du cognement sur la base du signal de détection du capteur de cognement (10) dans lequel les composants dans la plage des ultrasons sont extraits avec un gain plus grand que celui des composants dans la plage audible ; et

l'appareil de commande (20) est adapté pour commander la combustion du moteur (51) sur la base du résultat de détermination de l'apparition du cognement.

2. Unité d'alimentation du véhicule de type à selle selon la revendication 1, le moteur (51) étant configuré de sorte qu'un diamètre de trou (a) du moteur (51) soit égal ou inférieur à 60 mm.

3. Unité d'alimentation du véhicule de type à selle selon la revendication 1 ou 2, dans laquelle le moteur (51) est configuré de sorte qu'une bande de fréquences qui est une bande de fréquences la plus petite parmi une pluralité de bandes de fréquence dans lesquelles les pics de la vibration de cognement sont répartis est égale ou supérieure à 10 kHz.

4. Unité d'alimentation du véhicule de type à selle selon au moins l'une des revendications 1 à 3, dans laquelle le moteur (51) est configuré de sorte qu'une bande de fréquences qui est une seconde bande de fréquences la plus petite parmi la pluralité des bandes de fréquence dans laquelle les pics de la vibration de cognement sont répartis se trouve dans la plage des ultrasons.

5. Unité d'alimentation du véhicule de type à selle selon au moins l'une des revendications 1 à 4, dans laquelle l'appareil de commande (20) inclut en outre un circuit filtre passe-bande analogique ou numérique dans lequel la majorité d'une bande passante est paramétrée au niveau de la plage des ultrasons.

6. Unité d'alimentation du véhicule de type à selle selon au moins l'une des revendications 1 à 5, dans laquelle l'appareil de commande (20) inclut en outre un circuit filtre passe-bande analogique ou numérique qui présente un pic de bande passante situé dans la plage des ultrasons.

7. Unité d'alimentation du véhicule de type à selle selon au moins l'une des revendications 1 à 6, dans laquelle l'appareil de commande (20) inclut en outre un circuit de calcul qui est adapté pour appliquer une transformée de Fourier au signal de détection du capteur de cognement (10) pour extraire les composants de la plage des ultrasons.

8. Véhicule type à selle comprenant l'unité d'alimentation selon au moins l'une des revendications 1 à 7, dans lequel au moins une partie de l'unité d'alimentation est exposée sur un côté du véhicule.

9. Procédé de commande d'une unité d'alimentation d'un véhicule type à selle présentant un moteur (51) et un capteur de cognement (10) adapté pour détecter la vibration du moteur (51) dans une plage audible et la vibration dans une plage ultrasonique qui sont générées par cognement, le procédé comprend :

l'extraction des composants dans la plage ultrasonique avec un gain plus grand que celui des composants dans la plage audible depuis un signal de détection du capteur de cognement (10) ;

la détermination de l'apparition du cognement sur la base du signal de détection du capteur de cognement (10) dans lequel les composants dans la plage des ultrasons sont extraits avec un gain supérieur à celui des composants dans la plage audible ; et

le contrôle de la combustion du moteur (51) sur la base d'un résultat de détermination de l'apparition du cognement.

10. Procédé de commande d'une unité d'alimentation selon la revendication 9, dans lequel une bande de fréquences qui est une bande de fréquences la plus petite parmi une pluralité de bandes de fréquence dans lesquelles les pics de la vibration de cognement sont répartis est égale ou supérieure à 10 kHz.

11. Procédé de commande d'une unité d'alimentation selon la revendication 9 ou 10, dans lequel une bande de fréquences qui est une seconde bande de fréquences la plus faible parmi la pluralité des bandes de fréquence dans lesquelles les pics de la vibration de cognement sont répartis se trouve dans la plage des ultrasons.

12. Procédé de commande d'une unité d'alimentation selon au moins l'une des revendications 9 à 11, dans lequel un circuit filtre passe-bande analogique ou numérique est prévu dans lequel la majorité d'une bande passante est paramétrée au niveau de la plage des ultrasons.

**13.** Procédé de commande d'une unité d'alimentation selon au moins l'une des revendications 9 à 12, dans lequel un circuit filtre passe-bande analogique ou numérique est prévu qui présente un pic de bande passante situé dans la plage des ultrasons.

**14.** Procédé de commande d'une unité d'alimentation selon au moins l'une des revendications 9 à 13, dans lequel un circuit de calcul est prévu qui applique une transformée de Fourier au signal de détection du capteur de cognement (10) pour extraire les composants de la plage des ultrasons.

FIG. 1

*FIG. 2*

*FIG. 3*

FIG. 4

FIG. 5

**FIG. 6A**

**FIG. 6B**

START

ACQUIRE KNOCK VIBRATION
DETECTION VALUE — S41

PERFORM LOGARITHMIC CONVERSION OF
KNOCK VIBRATION DETECTION VALUE — S42

S43

LOGARITHMIC KNOCK
VIBRATION DETECTION VALUE >
THRESHOLD OFFSET +
LOGARITHMIC AVERAGE
VALUE? — NO

YES S44

STORE DETERMINATION
RESULT INDICATING
"KNOCKING OCCURS"

S45

STORE DETERMINATION
RESULT INDICATING
"NO KNOCKING OCCURS"

CALCULATE LOGARITHMIC AVERAGE VALUE — S46

END

FIG. 7

FIG. 8

FIG. 9

FIG. 10

FIG. 11

| | IT IS RESET TIMING | IT IS NOT RESET TIMING |
|---|---|---|
| KNOCKING OCCURS | (1) IGNITION TIMING CORRECTION VALUE = LAST CYCLE CORRECTION VALUE – KNOCK DETERMINATION RETARD AMOUNT + RESET ADVANCE AMOUNT | (3) IGNITION TIMING CORRECTION VALUE = LAST CYCLE CORRECTION VALUE – KNOCK DETERMINATION RETARD AMOUNT |
| NO KNOCKING OCCURS | (2) IGNITION TIMING CORRECTION VALUE = LAST CYCLE CORRECTION VALUE + RESET ADVANCE AMOUNT | (4) IGNITION TIMING CORRECTION VALUE = LAST CYCLE CORRECTION VALUE |

*FIG. 12*

EP 2 868 902 B1

IGNITION TIMING

RETARD IGNITION BECAUSE KNOCK IS DETECTED

RETARD IGNITION BECAUSE KNOCK IS DETECTED

REFERENCE IGNITION TIMING

ADVANCE IGNITION BECAUSE IT IS RESET CYCLE

C1  C2  C3  C4  C5  N1

CYCLE

*FIG. 13*

KNOCK INTERFACE CIRCUIT

212     211     213     215

FROM KNOCK SENSOR 10 → FILTER PROCESSING SECTION → GAIN ADJUSTMENT SECTION → RECTIFICATION PROCESSING SECTION → BOTTOM HOLD PROCESSING SECTION → TO MICROCOMPUTER 23

TIMING SIGNAL

*FIG. 14*

KNOCK INTERFACE CIRCUIT

212     213     211     216

FROM KNOCK SENSOR 10 → FILTER PROCESSING SECTION → RECTIFICATION PROCESSING SECTION → GAIN ADJUSTMENT SECTION → INTEGRATION PROCESSING SECTION → TO MICROCOMPUTER 23

TIMING SIGNAL

*FIG. 15*

KNOCK INTERFACE CIRCUIT

212     213     216

FROM KNOCK SENSOR 10 → FILTER PROCESSING SECTION → RECTIFICATION PROCESSING SECTION → INTEGRATION PROCESSING SECTION → TO MICROCOMPUTER 23

TIMING SIGNAL

*FIG. 16*

EXTRACT ONLY STRENGTH OF
SPECIFIC FREQUENCY COMPONENTS
IN FFT PROCESSING

*FIG. 17*

*FIG. 18*

EP 2 868 902 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009056478 B3
- JP 2005083314 A
- JP 2005 A
- JP 083314 A